# EUROPÄISCHE PATENTSCHRIFT

(11) **EP 1 103 736 B1**
(45) Veröffentlichungstag und Bekanntmachung des Hinweises auf die Patenterteilung: **30.03.2005**
(21) Anmeldenummer: 00125703.9
(22) Anmeldetag: 23.11.2000
(51) Int. Cl.: F16C 33/38

(54) **Wälzkörperkette**
Chain cage for rolling members
Chaîne d'éléments de roulement

(30) Priorität: 24.11.1999 US 449227; 26.11.1999 DE 19957110
(43) Veröffentlichungstag der Anmeldung: 30.05.2001
(73) Patentinhaber: Rexroth Star GmbH, 97424 Schweinfurt (DE)
(72) Erfinder: Blaurock, Günter, Dipl.-Ing. (FH), 97464 Niederwerrn (DE); Schlereth, Rudolf, Dipl.-Ing. (FH), 97705 Frauenroth (DE); Stender, Hans-Georg, 97456 Hambach (DE)
(74) Vertreter: Herzog, Markus, Dipl.-Phys. Dr.

(56) Entgegenhaltungen:
- DE-A- 4 211 400
- DE-A- 19 830 578
- US-A- 2 897 021
- US-A- 3 733 110
- US-A- 5 295 749
- US-A- 5 927 858

## Beschreibung

Die Erfindung betrifft. eine Wälzkörperkette gemäß dem Oberbegriff des Anspruchs 1 sowie eine Wälzkörperkette gemäß dem Oberbegriff des Anspruchs 3.

Eine derartige Wälzkörperkette ist beispielsweise aus der gattungsbildenden DE-A-198 30 578 bekannt. Das längliche Führungsband dieser Wälzkörperkette ist leiterartig aufgebaut, wobei an den Leitersprossen jeweils ein Abstandselement angebracht ist, welches zwei hintereinander laufende Wälzkörper in Längsrichtung des Führungsbandes auf Abstand hält. Die den Wälzkörpern zugewandten Seiten der Abstandselemente weisen jeweils den Außenkonturen der Wälzkörper angepasste konkave Anlageflächen auf, welche sich im Betriebszustand der Wälzkörperkette zumindest im mittleren Bereich zwischen den Leiterholmen im Wesentlichen über ihre gesamten Flächen in Kontakt mit den Außenflächen der Wälzkörper befinden.

Weiterhin offenbart die US-A-5,927,858 eine Wälzkörperkette mit einzelnen zwischen zwei benachbarten Wälzkörpern jeweils eingesetzten Abstandselementen, welche nicht durch ein sich entlang der Wälzkörperkette erstreckendes längliches Führungsband zusammengehalten sind. Die einzelnen Abstandselemente weisen jeweils zwei voneinander abgewandte konkave Anlageflächen auf, mit welchen sie mit den Außenflächen der Wälzkörper in Kontakt treten, um diese zu führen und auf Abstand zu halten. Die Anlageflächen weisen in ihrem Zentrum Ausnehmungen auf, um ein Schmiermittel darin zu speichern.

Eine aus der DE-A-42 11 400 bekannte Wälzkörperkette weist ebenfalls einen im Wesentlichen leiterartigen Aufbau auf. Sie ist aus einer Mehrzahl von Kettengliedem aufgebaut, welche im Wesentlichen H-förmig gestaltet sind, sodass nach dem Zusammensetzen der Kettenglieder die Schenkel der H-Form in Längsrichtung angeordnet sind und zwei benachbarte Kettenglieder zwischen sich eine Aufnahme für einen rollenförmigen Wälzkörper bilden. Die Rollen werden durch die Sprossenabschnitte der Kettenglieder auf Abstand gehalten, wofür die Sprossenabschnitte konkave Anlageflächen aufweisen, die der Außenkontur der Rollen angepasst sind.

Ferner offenbart die US-A-2,897,021 eine Wälzkörperkette, umfassend eine Mehrzahl von zwischen kugelförmigen Wälzkörpem anzuordnenden Abstandselementen, welche aus mehreren Einzelteilen zusammengesetzt sind, wobei zwischen den Einzelteilen Hohlräume zur Aufnahme eines Schmiermittels verbleiben. Wenn die Kugeln der Wälzkörperkette in einen stark belasteten Bereich der die Wälzkörperkette einsetzenden Anordnung gelangt, so werden die Abstandselemente zusammengedrückt, wodurch auch die Schmiermittelhohlräume verkleinert werden und Schmiermittel aus den Hohlräumen herausgedrückt wird.

Ferner offenbart die US-A-5,295,749 ein ringförmiges Halteelement, welches eine Mehrzahl von rollenförmigen Wälzkörpern in einem ringförmigen Umfaufkanal eines Lagers aufnehmen kann. Das Halteelement weist eine Mehrzahl von Taschen zur Aufnahme der Wälzkörper auf. Die in Laufrichtung der Rollen bzw. entgegengesetzt dazu weisenden Anlageflächen des Halteelements weisen im Wesentlichen eine entsprechend der Oberfläche der Rollen konkav gekrümmte Form auf. Zur Unterstützung der Ausbildung eines gleichmäßigen Schmiermittelfilms über der Oberfläche der Rollen weisen die Anlageflächen ferner jeweils an ihrem radial äußeren Rand eine Vorsprung auf, welcher die Rollen in einem bestimmten Abstand von den Anlageflächen hält und damit ein Eintreten von Schmiermittel in diesen Zwischenraum ermöglicht. Bei dieser bekannten Haltevorrichtung befindet sich jedoch der Wälzkörper in Punktkontakt mit dem Vorsprung, wodurch eine hohe Belastung auf das Halteelement sowie auf die Wälzkörper einwirkt und die Reibung zwischen Wälzkörper und Halteelement vergrößert wird.

Eine weitere bekannte Wälzkörperkette für den Einsatz in einem ringförmigen Lager ist aus der US-A-3,733,110 bekannt. Bei diesem System werden die Wälzkörper in einzelnen rechteckförmigen Käfigen aus einem Material mit geringer Reibung aufgenommen, wobei die einzelnen Käfige zur Bildung einer Kettenstruktur von einem Draht oder einer Faser umwickelt und miteinander verbunden sind. Die Anlageflächen der Käfige sind im Wesentlichen eben, sodass sie auf die Wälzkörper in radialer Richtung des Kugellagers keine Hattekräfte ausüben.

Eine weitere Wälzkörperkette ist aus der prioritätsälteren, jedoch nachveröffentlichten DE-A-198 24 250 der Anmelderin bekannt. Zum weiteren Stand der Technik wird darüber hinaus auf die ausführliche diesbezügliche Diskussion in der Beschreibungseinleitung der DE-A-198 24 250 verwiesen.

Die DE-A-198 24 250 offenbart zwei Lösungsansätze, welche beide dazu dienen, die Belastbarkeit und Laufruhe von Wälzkörperketten zu erhöhen. Eine hohe Belastbarkeit wird dabei in beiden Fällen durch eine dichte Aufeinanderfolge der Wälzkörper sichergestellt. Unter einer dichten Aufeinanderfolge von Wälzkörpern wird dabei nicht nur von der DE-A-198 24 250, sondern auch von der vorliegenden Anmeldung eine Aufeinanderfolge verstanden, bei welcher das Verhältnis des Wälzkörperdurchmessers zum Abstand der Mittelpunkte aufeinander folgender Wälzkörper weniger als 1 : 1,5, vorzugsweise weniger als 1 : 1,25, am bevorzugtesten annähernd 1 : 1 beträgt.

Zur Erzielung der gewünschten Laufruhe schlägt die DE-A-198 24 250 zum einen vor, dann, wenn das Führungsband Halteelemente umfasst, welche ein Herausfallen der Wälzkörper aus dem Führungsband verhindern, jedem der Wälzkörper gesonderte Halteelemente zuzuordnen. Durch diese Maßnahme wird die Anzahl der ein Verbiegen des Führungsbandes ermöglichenden Stellen verdoppelt. Die hierdurch erzielte Flexibilisierung des Führungsbandes bewirkt, dass das Führungsband den Lauf der Wälzkörper nicht geräuschbildend beeinflussen kann. Zum anderen wird vorgeschlagen, die Wälzkörper in den Ausnehmungen des Führungsbandes nicht mehr zu halten, sondern lose aufzunehmen, d.h. allenfalls zu führen. Die hiermit einhergehende Möglichkeit von Relativbewegungen von Führungsband und Wälzkörper im Laufkanal, d.h. die damit erzielte weitgehende Entkopplung von Führungsband und Wälzkörpern zumindest in einer sowohl zu dessen Längsrichtung als auch zu dessen Querrichtung orthogonal verlaufenden Höhenrichtung, wirkt sich auf die Geräuschentwicklung vorteilhaft aus. In der Praxis hat sich aber gezeigt, dass insbesondere die letztgenannte Ausführungsform der DE-A-198 24 250 einem relativ hohen Verschleiß ausgesetzt ist.

Es ist daher Aufgabe der Erfindung, eine Wälzkörperkette mit lose in den Ausnehmungen des Führungsbandes aufgenommenen Wälzkörpern im Hinblick auf eine höhere Lebensdauer bzw. höhere Gesamtbetriebsdauer zu verbessern.

Diese Aufgabe wird gemäß der Erfindung durch eine Wälzkörperkette nach Anspruch 1 bzw. 3 gelöst.

Eine stärkere Flexibilisierung des Führungsbandes kann dadurch erreicht werden, dass die Längsabmessung der Abstandselemente in deren seitlichen Randabschnitten kleiner als 50%, vorzugsweise kleiner als 20%, des Radius der Wälzkörper ist oder dass die Länge der freien Längenabschnitte das Doppelte, vorzugsweise das Zehnfache, der Länge der Verbindungsabschnitte beträgt.

Eine im Wesentlichen unveränderliche Größe und Gestalt der die Wälzkörper aufnehmenden Ausnehmungen kann dadurch sichergestellt werden, dass das Führungsband im Wesentlichen leiterartig ausgebildet ist, d.h. beispielsweise dadurch, dass das Führungsband wenigstens zwei in Querrichtung voneinander beabstandete und die Abstandselemente zwischen sich aufnehmende, längliche flexible Verbindungselemente umfasst.

In Weiterbildung der Erfindung wird vorgeschlagen, dass die die Ausnehmungen begrenzenden Flächen der Abstandselemente im Wesentlichen orthogonal zur Längsrichtung des Führungsbandes verlaufen. Dies ermöglicht einen besonders flexiblen Aufbau des Führungsbandes, da hierdurch die Länge der das Führungsband versteifenden Verbindungsabschnitte lediglich der Dicke der Abstandselemente in ihrem die Wälzkörper voneinander trennenden Mittelabschnitt entspricht. Der Wert dieser Dicke ist nämlich nach unten nur durch die gewünschte Stabilität des Führungsbandes begrenzt, das vorzugsweise als einstückiges Kunststoffteil, vorteilhafterweise im Spritzgußverfahren, hergestellt ist. Diese Ausführungsform hat darüber hinaus den Vorteil, dass ein und dasselbe Führungsband mit unterschiedlichen Typen von Wälzkörpern kombiniert werden kann, beispielsweise Kugeln und Rollen.

Die die Ausnehmungen begrenzenden Flächen aufeinander folgender Abstandselemente weisen also in der Nähe der seitlichen Randabschnitte der Abstandselemente einen geringeren Abstand voneinander auf als im Bereich eines zwischen den Randabschnitten angeordneten Mittelabschnitts. Dies hat beim Einsatz von Rollen als Wälzkörper Vorteile. Beim Einsatz von Rollen kommen diese mit den Abstandselementen allenfalls in den Flächenabschnitten geringeren Längsabstands zur Anlage, so dass auch nur in diesen Flächenabschnitten geringeren Längsabstands die Gefahr des Abstreifens von Schmierstoff von der Wälzkörperoberfläche besteht. In den Flächenabschnitten größeren Längsabstands bleibt die Oberfläche der Wälzkörper hingegen auch bei der Vorüberbewegung an den Abstandselementen sicher mit Schmierstoff benetzt, so dass die Schmierung des Laufkanals, in dem sich die Wälzkörperkette bewegt, gewährleistet ist.

Beim Einsatz von Kugeln tritt das Problem der Schmierstoffabstreifung aufgrund der geringeren Kontaktfläche mit den Abstandselementen nur in unkritischem Maße auf. Der Vorteil von Flächenabschnitten größeren Längsabstands ist in diesem Fall darin zu sehen, dass die Dichte der Aufeinanderfolge der Kugeln und somit die Tragfähigkeit der Wälzkörperkette erhöht werden kann. Da die Flächenabschnitte größeren Längsabstands lediglich den Mittelabschnitt der Abstandselemente überbrücken müssen, können die Abstandselemente in ihrem Mittelabschnitt entsprechend dünner ausgelegt sein als dies bei einem Abstandselement möglich wäre, das sich mit konstanter Dicke über die gesamte Distanz zwischen den beiden länglichen flexiblen Verbindungselementen erstreckt.

Im Falle des Einsatzes von Kugeln als Wälzkörper ist es darüber hinaus denkbar, dass die Flächenabschnitte größeren Längsabstands zumindest teilweise als Teil einer Zylinderfläche ausgebildet sind, wobei sich die Zylinderachse vorteilhafterweise in einer sowohl zur Längsrichtung als auch zur Querrichtung des Führungsbands orthogonal verlaufenden Richtung erstreckt.

Gemäß der Erfindung wird zusätzlich oder alternativ ein Abstreifen von Schmiermittel auch von den Laufflächen des Laufkanals, in dem sich die Wälzkörperkette bewegt, vorhindert indem wenigstens ein Teil der Abstandselemente an Begrenzungsrändern, welche das jeweilige Abstandselement in einer zur Längsrichtung und Querrichtung des Führungsbandes jeweils orthogonalen Höhenrichtung begrenzen, Ausnehmungen aufweist, welche bei einer Bewegung der Wälzkörperkette in Längsrichtung des Führungsbandes den Durchtritt von Schmierstoff ermöglichen.

Ferner wird daran gedacht, dass wenigstens ein Teil der Abstandselemente eine Höhe aufweist, die kleiner ist als der Durchmesser der Wälzkörper.

Nach einem weiteren Gesichtspunkt betrifft die Erfindung eine Wälzkörperkettenanordnung, umfassend wenigstens eine erfindungsgemäße Wälzkörperkette der oben beschriebenen Art, wobei zwischen einem vorauslaufenden Längsende eines Trägerbzw. Führungsbandes und einem nachlaufenden Ende eines Träger- bzw. Führungsbandes ein diese beiden Längsenden auf Abstand haltender Trenn-Wälzkörper angeordnet ist. Dabei können die beiden Längsenden sowohl ein und derselben Wälzkörperkette als auch zwei verschiedenen Wälzkörperketten angehören.

Im Stand der Technik sind zum einen Wälzkörperkettenanordnungen bekannt, bei denen das vorauslaufende Längsende und das nachlaufende Längsende miteinander fest verbunden sind, beispielsweise durch einen Verrastungsmechanismus oder dergleichen. Zum anderen gibt es Wälzkörperkettenanordungen, bei denen die beiden Längsenden relativ zueinander frei beweglich aneinander angrenzen. Die erstgenannte Ausführungsvariante hat den Nachteil, dass für die Verbindung der beiden Längsenden entsprechender Raum vorgesehen werden muß, und dass in diesem Raum kein Wälzkörper angeordnet sein kann, was die Tragfähigkeit der bekannten Wälzkörperkettenanordnung zumindest im Bereich der Verbindung der beiden Längsenden beeinträchtigt. Die zweitgenannte Ausführungsvariante hat den Nachteil, dass der zwischen den Längsenden vorhandene Zwischenraum ein unkontrolliertes Dehnen der Wälzkörperkette zulässt, was bis zu deren Reißen führen kann.

Im Gegensatz hierzu verhindert die vorstehend angegebene Wälzkörperkettenanordnung ein derartiges unkontrolliertes Dehnen. Darüber hinaus wird ermöglicht, dass die Wälzkörper auch im Bereich des Übergangs von einem vorauslaufenden Kettenende zu einem nachlaufenden Kettenende mit der gleichen Dichte aufeinander folgend angeordnet sein können, mit der sie auch über die gesamte sonstige Länge der Wälzkörperketten angeordnet sind. Somit weist die Wälzkörperkettenanordnung auch in dem Verbindungsbereich hohe Belastbarkeit auf.

An dieser Stelle sei darauf hingewiesen, dass die Idee, zwischen aufeinander folgenden Längsenden von Wälzkörperketten einen Trenn-Wälzkörper vorzusehen, nicht auf Wälzkörperketten beschränkt ist, bei den die Wälzkörper in den Ausnehmungen des Führungsbandes lose aufgenommen sind, sondern auch bei solchen Wälzkörperketten eingesetzt werden kann, bei denen die Wälzkörper in diesen Ausnehmungen gehalten sind.

Wenn eine Endfläche wenigstens eines der Längsenden, vorteilhafterweise wenigstens des nachlaufenden Längsendes, wenigstens teilweise in Anpassung an die Außenumfangsfläche des Trenn-Wälzkörpers ausgebildet ist, so kann der Trenn-Wälzkörper mit diesem Längsende in Führungs- bzw. Zentrierungseingriff treten. Dies hat zur Folge, dass die Umlenkung des Führungsbandes in einem gekrümmten Abschnitt des Laufkanals nicht oder zumindest nicht ausschließlich durch die Wechselwirkung dieses Führungsbandes mit dem Begrenzungswänden des Laufkanals erfolgt, sondern eine Mitnahme bzw. Auslenkung dieses Längsendes durch den zugeordneten Trenn-Wälzkörper erfolgt, was sich vorteilhaft auf die Laufruhe der erfindungsgemäßen Wälzkörperkettenanordnung bzw. der erfindungsgemäßen Wälzkörperkette auswirkt.

Die Erfindung wird im folgenden an Ausführungsbeispielen anhand der beigefügten Zeichnung näher erläutert werden. Es stellt dar:
- Fig. 1: eine Draufsicht auf eine Kugelkette gemäß einem Illustrationsbeispiel.
- Fig. 2: eine Ansicht analog Fig. 1 einer Kugelkette gemäß einem weiteren Illustrationsbeispiel; und
- Fig. 3: eine perspektivische Ansicht einer erfindungsgemäßen Rollenkette.

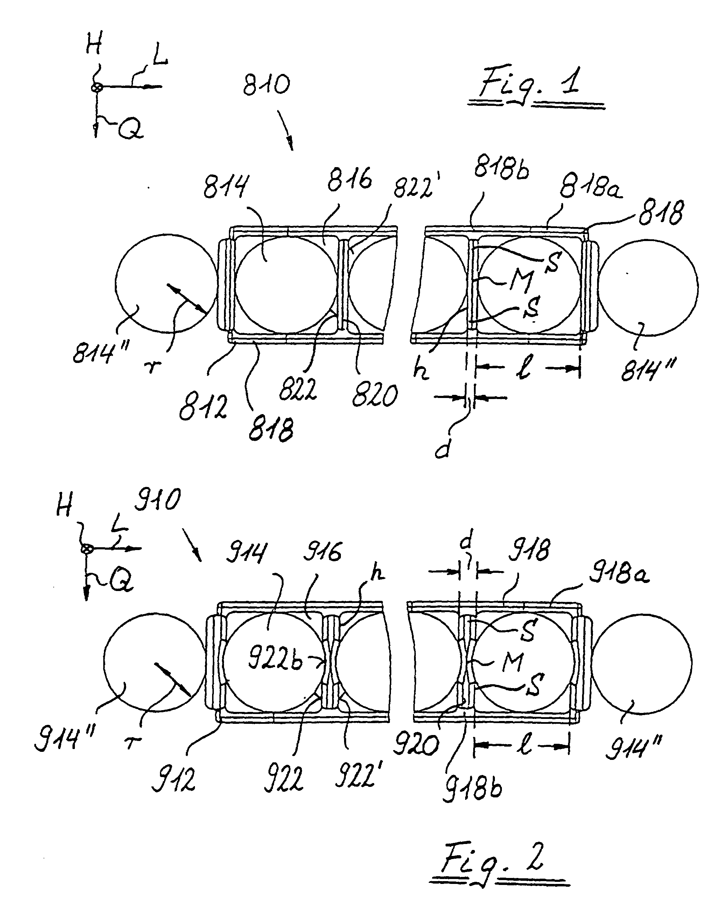

In Fig. 1 ist eine Wälzkörperkette als Illustrationsbeispiel ganz allgemein mit 810 bezeichnet. Sie umfasst ein Führungsband 812 und eine Mehrzahl von Wälzkörpern 814, beispielsweise Kugeln. Das Führungsband 812 ist im Wesentlichen leiterartig ausgebildet mit zwei sich in Längsrichtung L der Wälzkörperkette 810 erstreckenden, flexiblen Leiterholmen 818 und einer Mehrzahl von sich in Querrichtung Q erstreckenden Leitersprossen 820. Die Holme 818 und Sprossen 820 bilden zwischen sich Ausnehmungen 816 zur Aufnahme der Kugeln 814. Die Holme 818 dienen dabei zur seitlichen Führung der Kugeln 814, während die Sprossen 820 als Abstandselemente dienen, welche einer direkten Berührung zweier aufeinander folgender Kugeln 814 und somit einem übermäßigen Verschleiß dieser Kugeln 814 vorbeugen.

Festzuhalten ist, dass die Kugeln 814 in den Ausnehmungen 816 lose aufgenommen sind, d.h. das Führungsband 812 bzw. die Abstandselemente 820 können auf die Kugeln 814 keinerlei Haltefunktion ausüben. Vielmehr fallen die Kugeln 814 aus den Ausnehmungen 816 heraus, wenn die Kugelkette 810 aus dem Laufkanal einer Linearführung, beispielsweise einer Kugelschienenführung, oder eines Linearantriebes, wie eines Kugelgewindetriebes, herausgenommen wird. Darüber hinaus kann das Führungsband 812 auch in einer sowohl zur Längsrichtung L als auch zur Querrichtung Q orthogonal verlaufenden Höhenrichtung H keine Kraft auf die Kugeln 814 ausüben, so dass sich die Kugeln 814 insbesondere in den Umlenkstücken der Laufbahn ungehindert bewegen können. Dies wirkt sich insbesondere auf die Geräuschentwicklung vorteilhaft aus.

Im Unterschied zur Ausführungsform gemäß Fig. 6 der prioritätsälteren, jedoch nachveröffentlichten deutschen Patentanmeldung DE 198 24 250.6, deren Offenbarung hiermit nochmals ausdrücklich in Bezug genommen wird, weisen die Abstandselemente 820 Anlageflächen 822 und 822' auf, die im Wesentlichen vollständig orthogonal zur Längsrichtung L verlaufen. Hierdurch können die Kugeln 814 mit den Abstandselementen 820 allenfalls in deren Mittelabschnitt M in Anlageeingriff gelangen, nicht jedoch in deren beiden Seitenabschnitten S, über welche die Abstandselemente 820 mit Verbindungsabschnitten 818b der Holme 818 verbunden sind. Wesentlich ist, dass die Dicke d der Abstandselemente 820 in Längsrichtung L geringer, vorzugsweise erheblich geringer, bemessen ist zum einen als der Radius r der Wälzkörper 814 und zum anderen als die Länge I des freien Streckenabschnitts 818a der Holme 818 zwischen zwei aufeinander folgenden Abstandselementen 820.

Aufgrund der vergleichsweise großen Länge I der freien Streckenabschnitte 818a verfügt das Führungsband 812 zum einen über eine relativ hohe Flexibilität. Zum anderen kann sich das Führungsband 812 über einen relativ großen Bruchteil seiner Gesamtlänge um zur Querrichtung Q parallel verlaufende Achsen verformen, was die spezifische Biegebeanspruchung des Führungsbandes 812 je Längeneinheit der zur Verformung zur Verfügung stehenden freien Streckenabschnitte 818a senkt. Insbesondere Letzteres wirkt sich vorteilhaft auf die Lebensdauer bzw. Gesamtbetriebsdauer des Führungsbandes 812 und somit der gesamten Wälzkörperkette 810 aus.

Festzuhalten ist noch, dass die in Höhenrichtung H gemessene Höhe h der Abstandselemente 820 vorzugsweise kleiner bemessen ist als der Durchmesser 2r der Kugeln 814. Hierdurch kann einem Abstreifen von Schmierstoff von den Begrenzungswänden des Laufkanals durch die Abstandselemente 820 weitgehend vorgebeugt werden. Allerdings sollte die Höhe h größer bemessen sein als der Radius r der Wälzkörper 814, um stets einen sicheren Mitnahmeeingriff zwischen dem Führungsband 812 und den Wälzkörpern 814 gewährleisten zu können.

In Fig. 2 ist ein weiteres Illustrationsbeispiel einer Wälzkörperkette dargestellt, deren Aufbau im Wesentlichen der in Fig. 1 dargestellten Wälzkörperkette 810 entspricht. Analoge Teile sind in Fig. 2 daher mit gleichen Bezugszeichen versehen wie in Fig. 1, jedoch vermehrt um die Zahl 100. Darüber hinaus wird das Beispiel gemäß Fig. 2 im Folgenden nur insoweit beschrieben, als es sich von dem der Fig. 1 unterscheidet, auf deren Beschreibung hiermit ansonsten ausdrücklich verwiesen sei.

Auch die Wälzkörperkette 910 gemäß Fig. 2 umfasst eine Mehrzahl von Wälzkörpern 914 und ein leiterartig aufgebautes Führungsband 912 mit Holmen 918 und Sprossen bzw. Abstandselementen 920. Die die Ausnehmungen 916 zur Aufnahme der Kugeln 914 begrenzenden Flächen 922 und 922' verlaufen im Wesentlichen orthogonal zur Längsrichtung L des Führungsbands 912. Dabei sind die Worte "im Wesentlichen" lediglich dadurch eingeschränkt, dass die Anlageflächen 922 und 922' im Mittelabschnitt M der Abstandselemente 920 eine leichte konkave Wölbung 922b aufweisen, welche einem Teil einer Zylinderfläche mit in Höhenrichtung H verlaufender Zylinderachse entspricht.

Diese leichte Wölbung 922b erlaubt es, die Dichte der Aufeinanderfolge der Kugeln 914 zu erhöhen, ohne die Stabilität des Führungsbandes 912 zu gefährden. Die Seitenabschnitte S der Abstandselemente 920 können nämlich in Längsrichtung L dicker ausgebildet sein, was die Stabilität des Führungsbandes 912 insgesamt erhöht und ferner auch herstellungstechnische Vorteile bei der Fertigung des Führungsbandes 912 als einstückiges Kunststoff-Spritzgussteil hat.

Für die Dicke d, die die Abstandselemente 920 in ihren Seitenabschnitten S aufweisen und die darüber hinaus der Länge der versteiften Holmenabschnitte 918b entspricht, und die Länge I der freien Längenabschnitte 918a der Holme 918 des Führungsbands 912 gelten jedoch weiterhin die vorstehend am Beispiel der Fig. 1 erläuterten Bemessungsregeln. Entsprechendes gilt auch für die Höhe h der Abstandselemente 920.

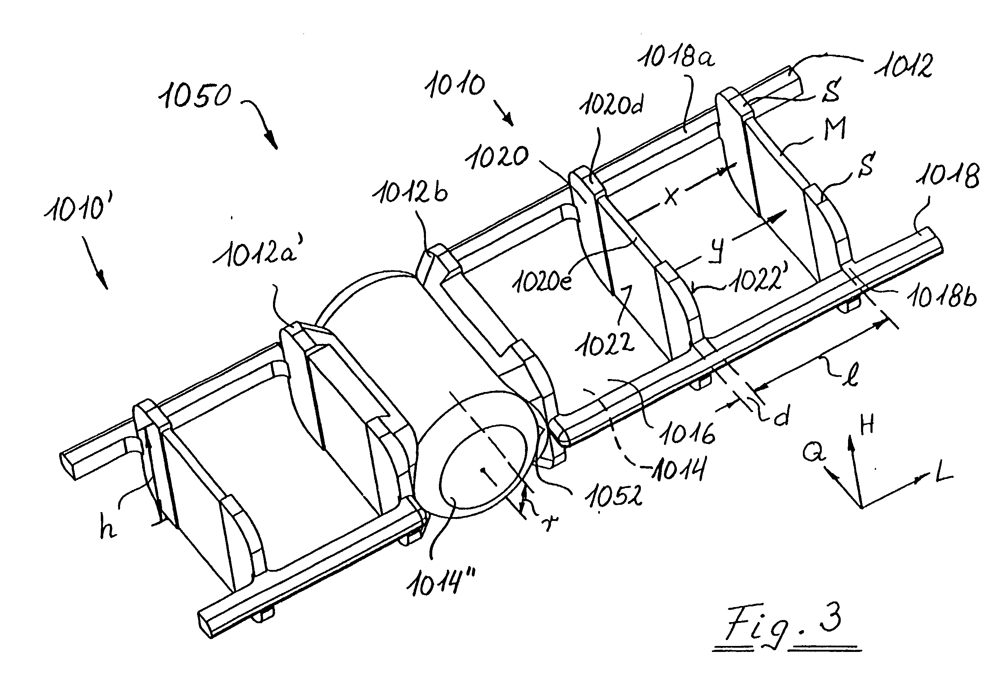

In Fig. 3 ist eine Ausführungsform einer erfindungsgemäßen Wälzkörperkette dargestellt, welche im Wesentlichen den Wälzkörperketten 810 und 910 gemäß Figuren 1 und 2 entspricht. Daher werden im Folgenden analoge Teile in Fig. 3 mit gleichen Bezugszeichen versehen wie in Fig. 1, jedoch vermehrt um die Zahl 200. Darüber hinaus wird die Ausführungsform gemäß Fig. 3 im Folgenden nur insoweit beschrieben werden, als sie sich von den Illustrationsbeispielen gemäß Fig. 1 und 2 unterscheidet, auf deren Beschreibung hiermit ansonsten ausdrücklich verwiesen sei.

Ein Hauptunterschied zwischen der Wälzkörperkette 1010 gemäß Fig. 3 und den Wälzkörperketten 810 und 910 gemäß Fig. 1 und 2 besteht darin, dass anstelle von Kugeln in den Ausnehmungen 1016 des leiterartigen Führungsbandes 1012 Rollen 1014 aufgenommen sind, die jener Rolle 1014" entsprechen, die gemäß Fig. 3 zwischen den Längsenden 1012b der Wälzkörperkette 1010 und dem Längsende 1012a' einer weiteren, analog aufgebauten Wälzkörperkette 1010' angeordnet ist. Das leiterartige Führungsband 1012 umfasst wiederum Holme 1018 und Stege bzw. Abstandselemente 1020, wobei die Rollen 1014 in den von diesen Holmen 1018 und Abstandselementen 1020 gebildeten Ausnehmungen 1016 wiederum lose aufgenommen sind. Das Führungsband 1012 kann also auf die Rollen 1014 wiederum keinerlei Haltefunktion ausüben, sondern diese mittels der Abstandselemente 1020 lediglich relativ zueinander auf Abstand halten, um einen übermäßigen Verschleiß aufgrund gegenseitiger Reibung zu verhindern. Darüber hinaus kann das Führungsband 1012 auch in einer orthogonal sowohl zur Längsrichtung L als auch zur Querrichtung Q verlaufenden Höhenrichtung H keine Kraft auf die Wälzkörper 1014 ausüben.

Ähnlich wie bei den Illustrationsbeispielen gemäß Fig. 1 und 2 verlaufen die Anlageflächen 1022 und 1022' der Abstandselemente 1020 im Wesentlichen orthogonal zur Längsrichtung L, wobei der Begriff "im Wesentlichen" bei der Ausführungsform gemäß Fig. 3 lediglich dadurch eingeschränkt ist, dass entsprechend der vorliegenden Erfindung insofern ein stufenförmiger Verlauf dieser Anlageflächen 1022 und 1022' vorliegt, als der in Längsrichtung L genommene Abstand x dieser Flächen in den Seitenabschnitten S der Abstandselemente 1020 einen kleineren Wert aufweist als der entsprechende Abstand y im Mittelabschnitt M der Abstandselemente 1020. Durch diese Stufen-Ausbildung können die Rollen 1014 mit den Anlageflächen 1022 und 1022 lediglich im Bereich der Seitenabschnitte S der Abstandselemente 1020 in Kontakt gelangen, während sie im Bereich der Mittelabschnitte M zu diesen Flächen stets einen Mindestabstand (y-x)/2 haben. Daher besteht zumindest im Mittelabstand M der Abstandselemente 1020 nicht die Gefahr, dass Schmierstoff von der Oberfläche der Rollen 1014 abgestreift würde.

Um darüber hinaus ein Abstreifen von Schmierstoff von den Begrenzungswandungen des Laufkanals, in dem die Wälzkörperkette 1010 aufgenommen ist, verhindern zu können, weisen die Abstandselemente 1020 im Bereich ihrer Mittelabschnitte M eine geringere Höhe auf als deren Seitenabschnitte S, so dass sich im Bereich der oberen bzw. unteren Begrenzungsränder 1020d im Mittelabschnitt eine Ausnehmung 1020e bildet, welche einen Durchtritt von Schmierstoff in Längsrichtung L ermöglicht.

Für die Dicke d, die die Abstandselemente 1020 in ihren Seitenabschnitten S aufweisen und die darüber hinaus der Länge der versteiften Holmenabschnitte 1018b entspricht, und die Länge I der freien Längenabschnitte 1018a der Holme 1018 des Führungsbands 1012 gelten jedoch weiterhin die vorstehend am Beispiel der Fig. 1 erläuterten Bemessungsregeln. Entsprechendes gilt auch für die Höhe h der Abstandselemente 1020.

Es wurde vorstehend bereits darauf hingewiesen, dass Fig. 3 die Aufeinanderfolge zweier Wälzkörperketten 1010 und 1010' darstellt, also eine Wälzkörperkettenanordnung 1050. Zwischen dem Längsende 1012b der Wälzkörperkette 1010 und dem Längsende 1012a' der Wälzkörperkette 1010' ist ein diese beiden Längsenden auf Abstand haltender Wälzkörper 1014 angeordnet. Das Vorsehen eines derartigen Trenn-Wälzkörpers 1014 hat den Vorteil, dass die Aufeinanderfolge von Wälzkörpern auch über den Anschlussbereich der beiden Wälzkörperketten 1010 und 1010' mit der gleichen Dichte fortgesetzt werden kann, wie sie im Bereich der Mittelabschnitte dieser Wälzkörperketten vorliegt. D.h. die Aneinanderreihung einer Mehrzahl von Wälzkörperketten braucht nicht einmal stellenweise mit Einbußen an Tragfähigkeit der Wälzkörperkettenanordnung 1050 einher zu gehen. Lediglich ergänzend sei darauf hingewiesen, dass auch bei den Illustrationsbeispielen gemäß Figuren 1 und 2 derartige Trenn-Wälzkörper 814" bzw. 914" vorgesehen sind, wobei allerdings die endständigen Abstandselemente im Hinblick auf die Gesamtstabilität der Wälzkörperkette geringfügig dicker ausgebildet sind als mittlere Abstandselemente.

Festzuhalten ist schließlich noch, dass bei der Ausführungsform gemäß Fig. 3 die endständigen Abstandselemente 1020 mit Anlageflächen 1052 ausgebildet sind, welche entsprechend der Außenumfangsfläche der Trenn-Wälzkörper 1014" konkav gewölbt sind. Hierdurch wird erreicht, dass die Längsenden 1012b bzw. 1012a' der Wälzkörperketten 1010 bzw. 1010' in gekrümmten Bereichen des Laufkanals, beispielsweise in Wälzkörper-Umlenkstücken des Laufkanals, von dem Trenn-Wälzkörper 1014 aufgrund des Eingriffs mit der konkaven Fläche 1052 in Richtung H mitgenommen werden können. Die Längsenden 1012b und 1012a' brauchen also nicht durch Wechselwirkung mit den Begrenzungswänden des Laufkanals ausgelenkt zu werden. Dies wirkt sich wiederum auf die Laufruhe der Wälzkörperkettenanordnung 1050 vorteilhaft aus.

## Patentansprüche

1. Wälzkörperkette (810; 910; 1010) umfassend
- eine Mehrzahl von in dichter Aufeinanderfolge angeordneten Wälzkörpern (814; 91.4; 1014) und
- ein längliches Führungsband (812; 912; 1012) mit
- einer Mehrzahl von Abstandselementen (820; 920; 1020), und
- wenigstens einem länglichen flexiblen Verbindungselement (818; 918; 1018), welches mit seitlichen Randabschnitten (S) der Abstandselemente (820; 920; 1020) verbunden ist, und zwar in einer solchen Anordnung, dass zwischen den in einer Querrichtung (Q) von dem Verbindungselement (818; 918; 1018) abstehenden Abstandselementen (820; 920; 1020) eine Mehrzahl von Ausnehmungen (816; 916; 1016) zur losen Aufnahme der Wälzkörper (814; 914; 1014) ausgebildet ist,
wobei die in Längsrichtung (L) des Führungsbandes (812; 912; 1012) genommene Abmessung (d) der Abstandsetemente (820; 920; 1020) in deren seitlichen Randabschnitten (S) kleiner ist als der Radius (r) der Wälzkörper (814; 914; 1014),
**dadurch gekennzeichnet, dass** die Wälzkörper Rollen (1014) sind und die die Ausnehmungen (1016) begrenzenden Flächen (1022, 1022') der Abstandselemente (1020) in der Nähe der seitlichen Randabschnitte (S) der Abstandselemente (1020) Anlageflächen für die Wälzkörper (1014) bilden, während sie in einem zwischen den seitlichen Randabschnitten (S) angeordneten Mittelabschnitt (M) in Längsrichtung (L) des Führungsbandes (1012) einen vorbestimmten Mindestabstand ((y-x)/2) von den Wälzkörpern (1014) aufweisen,
oder/und
dass wenigstens ein Teil der Abstandselemente (1020) an Begrenzungsrändern (1020d), welche das jeweilige Abstandselement (1020) in einer sowohl zur Längsrichtung (L) als auch zur Querrichtung (Q) des Führungsbandes (1012) jeweils orthogonalen Höhenrichtung (H) begrenzen, Ausnehmungen (1020e) aufweist, welche bei einer Bewegung der Wälzkörperkette (1010) in Längsrichtung (L) des Führungsbandes (1012) den Durchtritt von Schmierstoff ermöglichen.

2. Wälzkörperkette nach Anspruch 1,
**dadurch gekennzeichnet, dass** die Längsabmessung (d) der Abstandselemente (820; 920; 1020) in deren seitlichen Randabschnitten (S) kleiner als 50%, vorzugsweise kleiner als 20%, des Radius (r) der Wälzkörper (814; 914; 1014) ist.

3. Wälzkörperkette (810; 910; 1010) umfassend
- eine Mehrzahl von in dichter Aufeinanderfolge angeordneten Wälzkörpern (814; 914; 1014) und
- ein längliches Führungsband (812; 912; 1012) mit
- einer Mehrzahl von Abstandselementen (820; 920; 1020), und
- wenigstens einem länglichen flexiblen Verbindungselement (818; 918; 1018), welches mit seitlichen Randabschnitten (S) der Abstandselemente (820; 920; 1020) verbunden ist, und zwar in einer solchen Anordnung, dass zwischen den in einer Querrichtung (Q) von dem Verbindungselement (818; 918; 1018) abstehenden Abstandselementen (820; 920; 1020) eine Mehrzahl von Ausnehmungen (816; 916; 1016) zur losen Aufnahme der Wälzkörper (814; 914; 1014) ausgebildet ist,
wobei das Verbindungselement (818; 918; 1018) zwischen Verbindungsabschnitten (818b; 918b; 1018b) mit aufeinander folgenden Abstandselementen (820; 920; 1020) jeweils einen freien Längenabschnitt (818a; 918a; 1018a) umfasst, und dass die Länge (I) der freien Längenabschnitte (818a; 918a; 1018a) größer ist als die Länge (d) der Verbindungsabschnitte (818b; 918b; 1018b),
**dadurch gekennzeichnet, dass** die Wälzkörper Rollen (1014) sind und die die Ausnehmungen (1016) begrenzenden Flächen (1022, 1022') der Abstandselemente (1020) in der Nähe der seitlichen Randabschnitte (S) der Abstandselemente (1020) Anlageflächen für die Wälzkörper (1014) bilden, während sie in einem zwischen den seitlichen Randabschnitten (S) angeordneten Mittelabschnitt (M) in Längsrichtung (L) des Führungsbandes (1012) einen vorbestimmten Mindestabstand ((y-x)/2) von den Wälzkörpern (1014) aufweisen,
oder/und
dass wenigstens ein Teil der Abstandselemente (1020) an Begrenzungsrändern (1020d), welche das jeweilige Abstandselement (1020) in einer sowohl zur Längsrichtung (L) als auch zur Querrichtung (Q) des Führungsbandes (1012) jeweils orthogonalen Höhenrichtung (H) begrenzen, Ausnehmungen (1020e) aufweist, welche bei einer Bewegung der Wälzkörperkette (1010) in Längsrichtung (L) des Führungsbandes (1012) den Durchtritt von Schmierstoff ermöglichen.

4. Wälzkörperkette nach Anspruch 3,
**dadurch gekennzeichnet, dass** die Länge (I) der freien Längenabschnitte (818a; 918a; 1018a) das Doppelte oder das Zehnfache, der Länge (d) der Verbindungsabschnitte (818b; 918b; 1018b) beträgt.

5. Wälzkörperkette nach einem der Ansprüche 1 bis 4,
**dadurch gekennzeichnet, dass** das Führungsband (812; 912; 101 2) wenigstens zwei in Querrichtung (Q) voneinander beabstandete und die Abstandelemente (820; 920; 1020) zwischen sich aufnehmende, längliche flexible Verbindungselemente (818; 918; 1018) umfasst.

6. Wälzkörperkette nach einem der Ansprüche 1 bis 5,
**dadurch gekennzeichnet, dass** die die Ausnehmungen (816; 916; 1016) begrenzenden Flächen (822, 822'; 922, 922'; 1022, 1022') der Abstandselemente (820; 920; 1020) im Wesentlichen orthogonal zur Längsrichtung (L) des Führungsbandes (812; 912; 1012) verlaufen.

7. Wälzkörperkette nach Anspruch 6,
**dadurch gekennzeichnet, dass** die die Ausnehmungen (916; 1016) begrenzenden Flächen (922, 922'; 1022, 1022') aufeinander folgender Abstandselemente (920; 1020) in der Nähe der seitlichen Randabschnitte (S) der Abstandselemente (920; 1020) einen geringeren Abstand (x) voneinander aufweisen als im Bereich eines zwischen den Randabschnitten (S) angeordneten Mittelabschnitts (M).

8. Wälzkörperkette nach einem der Ansprüche 1 bis 7,
**dadurch gekennzeichnet, dass** die Wälzkörper Kugeln (814; 914) sind.

9. Wälzkörperkette nach Anspruch 8,
**dadurch gekennzeichnet, dass** die die Ausnehmungen (916) begrenzenden Flächen (922, 922') der Abstandselemente (920) in einem zwischen zwei seitlichen Randabschnitten (S) des Abstandelements (920) angeordneten Mittelabschnitt (M) wenigstens teilweise als Teil einer Zylinderfläche (922b) ausgebildet sind.

10. Wälzkörperkette nach einem der Ansprüche 1 bis 9,
**dadurch gekennzeichnet, dass** wenigstens ein Teil der Abstandselemente (820; 920; 1020) eine Höhe (h) aufweist, die kleiner ist als der Durchmesser (2r) der Wälzkörper (814; 914; 1014).

11. Wälzkörperkettenanordnung, umfassend wenigstens eine Wälzkörperkette (1010, 1010') gemäß einem der Ansprüche 1 bis 10,
**dadurch gekennzeichnet, dass** zwischen einem vorauslaufenden Längsende (1012b) einer Wälzkörperkette (1010) und einem nachlaufenden Ende (1012a') einer Wälzkörperkette (1010') ein diese beiden Längsenden auf Abstand haltenderTrenn-Wälzkörper (1014") angeordnet ist.

12. Wälzkörperkettenanordnung nach Anspruch 11,
**dadurch gekennzeichnet, dass** das vorauslaufende Längsende und das nachlaufende Längsende Längsenden des Träger- bzw. Führungsbandes ein und derselben Wälzkörperkette sind.

13. Wälzkörperkettenanordnung nach Anspruch 11,
**dadurch gekennzeichnet, dass** das vorauslaufende Längsende (1012b) einer ersten Wälzkörperkette (1010) angehört und das nachlaufende Längsende (1012a') einer zweiten Wälzkörperkette (1010') angehört.

14. Wälzkörperkettenanordnung nach einem der Ansprüche 11 bis 13,
**dadurch gekennzeichnet, dass** eine Endfläche (1052) wenigstens eines der Längsenden (1012b; 1012a') wenigstens teilweise in Anpassung an die Außenumfangsfläche des Trenn-Wälzkörpers (1014'') ausgebildet ist.

15. Wälzkörperkette nach einem der Ansprüche 1 bis 10,
**dadurch gekennzeichnet, dass** eine Endfläche (1052) des Führungsbandes (1012) wenigstens teilweise in Anpassung an die Außenumfangsfläche eines nicht mehr in einer Ausnehmung (1016) dieses Führungsbandes (1012) aufgenommenen Wälzkörpers (1014") ausgebildet ist.

## Claims

1. Chain of rolling elements (810; 910; 1010) comprising a plurality of rolling elements (814; 914; 1014) arranged in close succession and an elongate guide belt (812; 912; 1012) with a plurality of spacers (820; 920; 1020), and at least one elongate flexible connecting element (818; 918; 1018), which is connected to lateral edge portions (S) of the spacers (820; 920; 1020) and, more precisely, in an arrangement such that a plurality of recesses (816; 916; 1016) for loosely receiving the rolling elements (814; 914; 1014) is formed between the spacers (820; 920; 1020) projecting in a transverse direction (Q) from the connecting element (818; 918; 1018), wherein the dimension (d) of the spacers (820; 920; 1020) in their lateral edge portions (S), measured in the longitudinal direction (L) of the guide strip (812; 912; 1012), is smaller than the radius (r) of the rolling elements (814; 914; 1014), **characterised in that** the rolling elements are rolls (1014) and the surfaces (1022, 1022') of the spacers (1020), delimiting the recesses (1016) form, in the vicinity of the lateral edge portions (S) of the spacers (1020), contact surfaces for the rolling elements (1014) and have a predetermined minimum distance ((y-x)/2) from the rolling elements (1014) in a central portion (M) arranged between the lateral edge portions (S) in the longitudinal direction (L) of the guide belt (1012), and/or **in that** at least some of the spacers (1020) have on boundary edges(1020d) limiting the respective spacer (1020) in a height direction (H), orthogonal to the longitudinal direction (L) as well as to the transverse direction (Q) of the guide belt (1012), recesses (1020e) which, in the event of a movement of the chain of rolling elements (1010) in the longitudinal direction (L) of the guide belt (1012), allow the passage of lubricant.

2. Chain of rolling elements according to claim 1, **characterised in that** the longitudinal dimension (d) of the spacers (820; 920; 1020) in their lateral edge portions (S) is smaller than 50%, preferably smaller than 20%, of the radius (r) of the rolling elements (814; 914; 1014).

3. Chain of rolling elements (810; 910; 1010) comprising a plurality of rolling elements (814; 914; 1014) arranged in close succession and an elongate guide belt (812; 912; 1012) with a plurality of spacers (820; 920; 1020), and at least one elongate flexible connecting element (818; 918; 1018), which is connected to lateral edge portions (S) of the spacers (820; 920; 1020) and, more precisely, in an arrangement such that a plurality of recesses (186; 916; 1016) for loosely receiving the rolling elements (814; 914; 1014) is formed between the spacers (820; 920; 1020) projecting in a transverse direction (Q) from the connecting element (818; 918; 1018), wherein the connecting element (818; 918; 1018) between connecting portions (818b; 918b, 1018b) with successive spacers (820; 920; 1020) in each case comprises a free longitudinal portion (818a; 918a; 1018a), and in that the length (1) of the free longitudinal portions (818a; 918a; 1018a) is greater than the length (d) of the connecting portions (818b; 918b, 1018b), **characterised in that** the rolling elements are rolls (1014) and the surfaces (1022, 1022') of the spacers (1020)delimiting the recesses (1016), form, in the vicinity of the lateral edge portions (S) of the spacers (1020), contact surfaces for the rolling elements (1014) and have a predetermined minimum distance ((y-x)/2) from the rolling elements (1014) in a central portion (M) arranged between the lateral edge portions (S) in the longitudinal direction (L) of the guide belt (1012), and/or **in that** at least some of the spacers (1020) have on boundary edges(1020d) limiting the respective spacer (1020) in a height direction (H), orthogonal both to the longitudinal direction (L) as well as to the transverse direction (Q) of the guide belt (1012), recesses (1020e) which, in the event of a movement of the chain of rolling elements (1010) in the longitudinal direction (L) of the guide belt (1012), allow the passage of lubricant.

4. Chain of rolling elements according to claim 3, **characterised in that** the length (1) of the free longitudinal portions (818a; 918a; 1018a) is double or ten times the length (d) of the connecting portions (818b; 918b, 1018b).

5. Chain of rolling elements according to any one of claims 1 to 4, **characterised in that** the guide belt (812; 912; 1012) comprises at least two elongate, flexible connecting elements (818; 918; 1018) mutually spaced apart in the transverse direction (Q) and receiving the spacers (820; 920; 1020) between them.

6. Chain of rolling elements according to any one of claims 1 to 5, **characterised in that** the surfaces (822, 822'; 922, 922'; 1022, 1022') of the spacers (820; 920; 1020), delimiting the recesses (816; 916; 1016), extend substantially orthogonally to the longitudinal direction (L) of the guide belt (812; 912; 1012).

7. Chain of rolling elements according to claim 6, **characterised in that** the surfaces (922, 922'; 1022, 1022') of successive spacers (920; 1020), delimiting the recesses (916; 1016), in the vicinity of the lateral edge portions (S) of the spacers (920; 1020), have a smaller spacing (x) from each other than in the region of a central portion (M) arranged between the edge portions (S).

8. Chain of rolling elements according to any of claims 1 to 7, **characterised in that** the rolling elements are balls (814; 914).

9. Chain of rolling elements according to claim 8, **characterised in that** the surfaces (922, 922') of the spacers (920), delimiting the recesses (916), in a central portion (M) arranged between the two lateral edge portions (S) of the spacer (920), are formed at least partially as part of a cylinder surface (922b).

10. Chain of rolling elements according to any one of claims 1 to 9, charactcrised in that at least some of the spacers (820; 920; 1020) have a height (h) which is smaller than the diameter (2r) of the rolling elements (814; 914; 1014).

11. Rolling element chain arrangement, comprising at least one chain of rolling elements according to any one of claims 1 to 10, **characterised in that** between a leading longitudinal end (1012b) of a chain of rolling elements (1010) and a trailing end (1012a') of a chain of rolling elements (1010'), a separating rolling element (1014") is arranged which keeps these two longitudinal ends at a distance.

12. Rolling element chain arrangement according to claim 11, **characterised in that** the leading longitudinal end and the trailing longitudinal end are longitudinal ends of the supporting and/or guiding belt of one and the same chain of rolling elements.

13. Rolling element chain arrangement according to claim 11, **characterised in that** the leading longitudinal end (1012b) belongs to a first chain of rolling elements (1010) and the trailing longitudinal end (1012a') belongs to a second chain of rolling elements (1010').

14. Rolling element chain arrangement according to any one of claims 11 to 13, **characterised in that** an end surface (1052) of at least one of the longitudinal ends (1012b; 1012a') is formed at least partially so as to correspond with the external peripheral surface of the separating rolling element (1014").

15. Chain of rolling elements according to any one of claims 1 to 10, **characterised in that** an end surface (1052) of the guide belt (1012) is formed at least partially so as to correspond with the external peripheral surface of a rolling element (1014") no longer received in a recess (1016) of this guide belt (1012).

## Revendications

1. Chaîne d'éléments de roulement (810 ; 910 ; 1010) comportant
- une pluralité d'éléments de roulement (814 ; 914 ; 1014), disposés étroitement les uns derrière les autres, et
- une bande de guidage (812 ; 912 ; 1012) longitudinale munie
- d'une pluralité d'écarteurs (820 ; 920 ; 1020), et
- d'au moins un élément de liaison (818 ; 918 ; 1018) longitudinal flexible, qui est relié à des parties d'embout latérales (S) des écarteurs (820 ; 920 ; 1020), à savoir selon un agencement tel que, entre les écarteurs (820 ; 920 ; 1020) en saillie dans un sens transversal (Q) sur l'élément de liaison (818 ; 918 ; 1018), il se forme une pluralité d'évidements (816 ; 916 ; 1016) destinés à recevoir de manière lâche les éléments de roulement (814 ; 914 ; 1014),
dans laquelle les parties d'embout latérales (S) des écarteurs (820 ; 920 ; 1020), considérées dans le sens longitudinal (L) de la bande de guidage (812 ; 912 ; 1012), ont une dimension (d) qui est inférieure au rayon (r) des éléments de roulement (814 ; 914 ; 1014),
**caractérisée en ce que** les éléments de roulement sont des rouleaux (1014) et les surfaces (1022, 1022') des écarteurs (1020) délimitant les évidements (1016) forment, à proximité des parties d'embout latérales (S) des écarteurs (1020), des surfaces d'appui pour les éléments de roulement (1014), alors que, dans une partie centrale (M), située entre les parties d'embout latérales (S), elles sont situées, dans le sens longitudinal (L) de la bande de guidage (1012), à une distance minimale «y-x)/2) prédéfinie des éléments de roulement (1014), et/ou **en ce qu'**au moins une partie des écarteurs (1020) sur des bords de délimitation (1020d) délimitant chaque écarteur (1020) dans une direction verticale (H), orthogonale au sens longitudinal (L) et au sens transversal (Q) de la bande de guidage (1012), comporte des évidements (1020e) qui permettent le passage de lubrifiant lors d'un mouvement de la chaîne d'éléments de roulement (1010) dans le sens longitudinal (L) de la bande de guidage (1012).

2. Chaîne d'éléments de roulement selon la revendication 1, **caractérisée en ce que** la dimension longitudinale (d) des écarteurs (820 ; 920 ; 1020) dans leurs parties d'embout latérales (S) est inférieure à 50 %, de préférence inférieure à 20 %, du rayon (r) des éléments de roulement (814 ; 914 ; 1014).

3. Chaîne d'éléments de roulement (810 ; 910 ; 1010) comportant
- une pluralité d'éléments de roulement (814 ; 914 ; 1014), disposés étroitement les uns derrière les autres, et
- une bande de guidage (812 ; 912 ; 1012) longitudinale munie
- d'une pluralité d'écarteurs (820 ; 920 ; 1020), et
- d'au moins un élément de liaison (818 ; 918 ; 1018) longitudinal flexible, qui est relié à des parties d'embout latérales (S) des écarteurs (820 ; 920 ; 1020), à savoir selon un agencement tel que, entre les écarteurs (820 ; 920 ; 1020) en saillie dans un sens transversal (Q) sur l'élément de liaison (818 ; 918 ; 1018), il se forme une pluralité d'évidements (816 ; 916 ; 1016) destinés à recevoir de manière lâche les éléments de roulement (814 ; 914 ; 1014),
dans laquelle l'élément de liaison (818 ; 918 ; 1018), entre des parties de liaison (818b ; 918b ; 1018b) avec des écarteurs (820 ; 920 ; 1020) successifs, comporte respectivement une partie longitudinale libre (818a ; 918a ; 1018a), et dans laquelle la longueur (1) des parties longitudinales libres (818a ; 918a ; 1018a) est supérieure à la longueur (d) des parties de liaison (818b ; 918b ; 1018b),
**caractérisée en ce que** les éléments de roulement sont des rouleaux (1014) et les surfaces (1022, 1022') des écarteurs (1020) délimitant les évidements (1016) forment, à proximité des parties d'embout latérales (S) des écarteurs (1020), des surfaces d'appui pour les éléments de roulement (1014), alors que, dans une partie centrale (M), située entre les parties d'embout latérales (S), elles sont situées, dans le sens longitudinal (L) de la bande de guidage (1012), à une distance minimale «y-x)/2) prédéfinie des éléments de roulement (1014), et/ou **en ce qu'**au moins une partie des écarteurs (1020), sur des bords de délimitation (1020d) délimitant chaque écarteur (1020) dans une direction verticale (H), orthogonale au sens longitudinal (L) et au sens transversal (Q) de la bande de guidage (1012), comporte des évidements (1020e) qui permettent le passage de lubrifiant lors d'un mouvement de la chaîne d'éléments de roulement (1010) dans le sens longitudinal (L) de la bande de guidage (1012).

4. Chaîne d'éléments de roulement selon la revendication 3, **caractérisée en ce que** la longueur (I) des parties longitudinales libres (818a ; 918a ; 1018a) est égale à deux fois ou dix fois la longueur (d) des parties de liaison (818b ; 918b ; 1018b).

5. Chaîne d'éléments de roulement selon l'une des revendications 1 à 4, **caractérisée en ce que** la bande de guidage (812 ; 912 ; 1012) comporte au moins deux éléments de liaison (818 ; 918 ; 1018) longitudinaux flexibles, écartés l'un de l'autre dans le sens transversal (Q) et recevant entre eux les écarteurs (820 ; 920 ; 1020).

6. Chaîne d'éléments de roulement selon l'une des revendications 1 à 5, **caractérisée en ce que** les surfaces (822, 822' ; 922, 922' ; 1022, 1022') des écarteurs (820 ; 920 ; 1020) délimitant les évidements (816 ; 916 ; 1016) sont orientées sensiblement orthogonalement au sens longitudinal (L) de la bande de guidage (812 ; 912 ; 1012).

7. Chaîne d'éléments de roulement selon la revendication 6, **caractérisée en ce que** les surfaces (922, 922' ; 1022, 1022') d'écarteurs (920 ; 1020) consécutifs délimitant les évidements (916 ; 1016) sont écartées l'une de l'autre, à proximité des parties d'embout latérales (S) des écarteurs (920 ; 1020), d'une distance (x) inférieure à celle dans la zone d'une partie centrale (M) située entre les parties d'embout (S).

8. Chaîne d'éléments de roulement selon l'une des revendications 1 à 7, **caractérisée en ce que** les éléments de roulement sont des billes (814 ; 914).

9. Chaîne d'éléments de roulement selon la revendication 8, **caractérisée en ce que** les surfaces (922, 922') des écarteurs (920) délimitant les évidements (916) sont réalisées au moins en partie sous forme de portion de surface cylindrique (922b) dans une partie centrale (M) située entre deux parties d'embout latérales (S) de l'écarteur (920).

10. Chaîne d'éléments de roulement selon l'une des revendications 1 à 9, **caractérisée en ce qu'**au moins une partie des écarteurs (820 ; 920 ; 1020) possède une hauteur (h) inférieure au diamètre (2r) des éléments de roulement (814 ; 914 ; 1014).

11. Système de chaînes d'éléments de roulement comportant au moins une chaîne (1010, 1010') selon l'une des revendications 1 à 10, **caractérisé en ce que**, entre une extrémité longitudinale antérieure (1012b) d'une chaîne d'éléments de roulement (1010) et une extrémité longitudinale postérieure (1012a'), est disposé un élément de roulement de séparation (1014") maintenant à distance l'une de l'autre ces deux extrémités longitudinales.

12. Système de chaînes d'éléments de roulement selon la revendication 11, **caractérisé en ce que** l'extrémité longitudinale antérieure et l'extrémité longitudinale postérieure sont des extrémités longitudinales de la bande de support ou de guidage d'une seule et même chaîne d'éléments de roulement.

13. Système de chaînes d'éléments de roulement selon la revendication 11, **caractérisé en ce que** l'extrémité longitudinale antérieure (1012b) appartient à une première chaîne d'éléments de roulement (1010) et l'extrémité longitudinale postérieure (1012a') appartient à une deuxième chaîne d'éléments de roulement (1010').

14. Système de chaînes d'éléments de roulement selon l'une des revendications 11 à 13, **caractérisé en ce qu'**une surface d'extrémité (1052) d'au moins l'une des extrémités longitudinales (1012b ; 1012a') est réalisée au moins en partie de manière à s'adapter à la surface périphérique extérieure de l'élément de roulement de séparation (1014").

15. Chaîne d'éléments de roulement selon l'une des revendications 1 à 10, **caractérisée en ce qu'**une surface d'extrémité (1052) de la bande de guidage (1012) est réalisée au moins en partie de manière à s'adapter à la surface périphérique extérieure d'un élément de roulement (1014") qui n'est plus logé dans un évidement (1016) de ladite bande de guidage (1012).
